(19) Europäisches Patentamt
European Patent Office
Office européen des brevets

(11) **EP 4 376 312 A1**

(12) **EUROPEAN PATENT APPLICATION**
published in accordance with Art. 153(4) EPC

(43) Date of publication:
**29.05.2024 Bulletin 2024/22**

(21) Application number: **22851826.2**

(22) Date of filing: **10.07.2022**

(51) International Patent Classification (IPC):
**H04B 3/32** (2006.01)   **H01B 11/18** (2006.01)

(86) International application number:
**PCT/CN2022/104784**

(87) International publication number:
**WO 2023/011112 (09.02.2023 Gazette 2023/06)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **04.08.2021   CN 202110888901**

(71) Applicant: **Nanjing Turbine Power Control Co., Ltd
Nanjing, Jiangsu 210037 (CN)**

(72) Inventor: **FENG, Jiansheng
Nanjing, Jiangsu 210037 (CN)**

(74) Representative: **Gong, Jinping
CocreateIP
Neumarkterstr. 21
81673 München (DE)**

(54) **CONSTANT ELECTRIC FIELD-BASED ACTIVE ANTI-INTERFERENCE METHOD AND CONTROL DEVICE**

(57)     The invention discloses an active anti-jamming method in a constant electric field and a control device thereof. The method comprises steps of applying a DC voltage between the anti-jamming core conductor of a cable and the cable shielding layer conductor to obtain an electrical displacement at the cable axis; calculating the electric field intensity between the cable shielding layer conductor and the anti-jamming core conductor in the radial direction; calculating the charges that are accumulated and need to be repaired per unit length of the cable between the cable shielding layer conductor and the anti-jamming core conductor; calculating the capacitance between the cable shielding layer conductor and the anti-jamming core conductor; calculating the electric field correction energy, and regarding the sum of power supply energy and the electric field correction energy as total anti-jamming energy; and repairing the electric field that has changed under the impact of the jamming signals. The method for active anti-jamming of transmitted signals surrounded by a constant electric field in the present invention makes use of the strong correction ability of a DC regulated power supply or a storage battery to keep the electric field constant, eliminate the impact of the changing electromagnetic field in the environment on the transmitted signals and ensure communication quality.

FIG. 3

**Description**

**TECHNICAL FIELD**

The present invention pertains to the technical field of communication, and specifically relates to an active anti-jamming method in a constant electric field and a control device thereof.

**BACKGROUND ART**

The current anti-jamming measures mainly adopt the method of grounding the cable shielding layer conductor. They are passive anti-jamming measures and have the following disadvantages:

1. For a metal mesh shielding layer, there are always jamming signals at a specific frequency or wavelength that can penetrate the shielding layer, affecting the transmission quality and stability of signals.

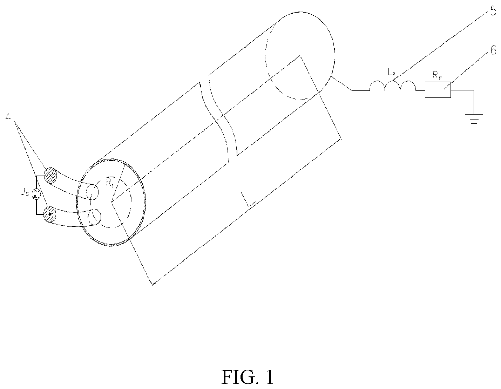

2. In order to prevent the shielding layer from forming grounding circulation, the shielding layer can only be grounded at a single point. When the cable reaches a certain length, hundreds of meters, thousands of meters or even tens of kilometers or more for example, as the shielding layer itself has resistance and inductance, as shown in FIG. 1, $R_P$ and Lp are the equivalent ground resistance and equivalent ground inductance of the shielding layer, the potential of the shielding layer far from the ground point of the shielding layer is different from that of the ground, and the farther from the ground point, the larger the equivalent resistance and the equivalent inductance will be and the higher the potential to the ground will be; AC high-frequency signals especially, the higher the frequency is, the larger the reactance will be, the higher the reactance of the shielding layer to the ground is, the larger the potential difference of the jamming signals to the ground will be, and the poorer the shielding effect of the jamming signals on the shielding layer is, the larger the impact / interference of the jamming signals on/in the transmitted signals will be.

3. Due to the effect of the equivalent inductance of the shielding layer, the ground current of the jamming signals with typical AC characteristics is grounded in a delayed manner on the inductor, unable to eliminate the jamming signals in time.

4. The shielding layer does not have an obvious shielding effect on low-frequency and ultra-low frequency signals, and the low-frequency and ultra-low frequency jamming signals have a long wavelength and can penetrate the shielding layer and interfere with the transmitted signals; the longer the cable is, the larger the ground resistance and ground inductance of the shielding layer will be and the worse the shielding effect on the jamming signals will be. Therefore, it is necessary to develop a new active anti-jamming method to solve the existing problem.

**SUMMARY OF THE INVENTION**

An objective of the present invention is to provide an active anti-jamming method in a constant electric field to solve the problem that jamming signals at a specific frequency or wavelength can penetrate the shielding layer, affecting the transmission quality and stability of the signals and meanwhile solve the problem of the prior art that the farther from the ground point, the poorer the anti-jamming capability will be.
In order to achieve the foregoing objective, the present invention provides the following technical solution: An active anti-jamming method in a constant electric field, comprising the following steps:

S1, applying a DC voltage $U_0$ between the anti-jamming core conductor of a cable and the cable shielding layer conductor by a DC regulated power supply or a storage battery to obtain an electrical displacement $D_E$ at the cable axis.

S2, calculating the electric field intensity $\vec{E}$ between the cable shielding layer conductor and the anti-jamming core conductor in the radial direction according to the cable structure and the DC voltage $U_0$;

S3, calculating the charges $\tau$ that are accumulated and need to be repaired per unit length of the cable between the cable shielding layer conductor and the anti-jamming core conductor;

S4, calculating the capacitance between the cable shielding layer conductor and the anti-jamming core conductor; and

S5, calculating the electric field correction energy $W_E$ stored between the cable shielding layer conductor and the anti-jamming core conductor, and regarding the sum of power supply energy $W_P$ and the electric field correction energy $W_E$ as total anti-jamming energy W; and repairing according to the total anti-jamming energy W the electric field that has changed under the impact of the jamming signals.

In S1, the electrical displacement $D_E$ is calculated by the following method:

$$D_E = \frac{\tau}{2\pi r} r^o$$

where, $r^o$ is a direction vector, r is the cylindrical radius of the cable and $\tau$ is the charges accumulated on the cable shielding layer conductor and the anti-jamming core.

In S2, the electric field intensity $\vec{E}$ between the cable shielding layer conductor and the anti-jamming core conductor is calculated with the following formula:

$$\vec{E} = \frac{\tau}{2\pi\varepsilon r} r^o \, ;$$

Taking the point on R2 as the starting point and the point on R1 as the end point, the sum of the changes in the potential along the path from the starting point to the end point in the direction of the electric field is the applied anti-jamming voltage $U_0$,

$$\int_1^2 \vec{E} d\vec{l} = \int_{R2}^{R1} \frac{\tau}{2\pi\varepsilon r} dr = \frac{\tau}{2\pi\varepsilon} \ln(R1 \, / \, R2) = U_0$$

where, In is natural logarithm, i.e., an operational symbol for calculating logarithms based on the constant e, $\vec{l}$ is a path of electrical displacement in the direction of electric field intensity, R1 is the inside radius of the cable shielding layer conductor, and R2 is the outside radius of the anti-jamming core conductor of the cable;
Directionless electric field intensity E is obtained

$$E = \frac{\tau}{2\pi\varepsilon r} = \frac{U_0 \cdot 2\pi\varepsilon}{\ln(R1 \, / \, R2)} \cdot \frac{1}{2\pi\varepsilon r} = \frac{U_0}{r \, \ln(R1 \, / \, R2)}.$$

In S3, the charges $\tau$ that are accumulated and need to be repaired per unit length of the cable between the cable shielding layer conductor and the anti-jamming core conductor:

$$\tau = U_0 \cdot \frac{2\pi\varepsilon}{\ln(R1 \, / \, R2)}$$

When the cable length is *L*, the charges accumulated on the cable shielding layer and anti-jamming core conductor with a length of *L* are:

$$\tau_{R_1} = 2\pi R_1 \sigma_{R_1} \cdot L = \frac{2\pi\varepsilon U_0}{\ln(R1 \, / \, R2)} \cdot L$$

$$\tau_{R_2} = -2\pi R_2 \sigma_{R_2} \cdot L = -\frac{2\pi\varepsilon U_0}{\ln(R1 \, / \, R2)} \cdot L$$

where, $\tau_{R1}$ are charges accumulated on the inside radius of the cable shielding layer conductor with a length of *L*, and $\tau_{R2}$ are charges accumulated on the outside radius of the anti-jamming core of the cable with a length of *L*.
In S3, the capacitance between the cable shielding layer conductor and the anti-jamming core conductor is calculated with the following formula

$$C = \frac{2\pi\varepsilon}{\ln(R1 / R2)};$$

where, $C$ is the capacitance between the cable shielding layer conductor and the anti-jamming core conductor per unit length,

When the cable length is $L$, the capacitance between the cable shielding layer conductor and the anti-jamming

$$C_L = \frac{2\pi\varepsilon}{\ln(R1 / R2)} \cdot L$$

core conductor with a length of $L$ is                           . where, $C_L$ is the capacitance between the cable shielding layer conductor and the anti-jamming core conductor.

In S5, the electric field correction energy stored between the cable shielding layer conductor and the anti-jamming core conductor is

$$W_E = \frac{1}{2} C U_0{}^2 = \frac{\pi\varepsilon U_0{}^2}{\ln(R1 / R2)} \cdot L .$$

A control device for realizing the foregoing active anti-jamming method in a constant electric field, comprises, a two-position switch connecting the cable shielding layer conductor and the anti-jamming core conductor;

a charge current limiting resistor connecting a working position in the two-position switch and used for limiting the charge current when an anti-jamming electric field is established; and

a discharge current limiting resistor connecting a maintenance position in the two-position switch and used for limiting discharge current when energy stored in an electric field is consumed.

A control device for realizing the foregoing active anti-jamming method in a constant electric field, When the two-position switch is set in the working position, DC voltage $U_0$ charges the cable shielding layer conductor and the anti-jamming core conductor via the charge current limiting resistor. When the power supply is just connected, the voltage between the cable shielding layer conductor and the anti-jamming core conductor is 0, the heating power of the charge current limiting resistor is the largest, which is: $P_{xc}=U_0{}^2/R_C$, and the current flowing through the charge current limiting resistor is $I_{xc}=U_0/R_C$; where, $P_{xc}$ represents the heating power of the charge current limiting resistor, Rcrepresents the resistance of the charge current limiting resistor, and $I_{xc}$ represents the current of the charge current limiting resistor;

When the two-position switch is set in the maintenance position, the power supply is disconnected. When the discharge current limiting resistor is just connected, the voltage between the cable shielding layer conductor and the anti-jamming core conductor is $U_0$, the heating power of the discharge current limiting resistor is the largest, which is: $P_{xf}=U_0{}^2/R_x$, and the current flowing through the discharge current limiting resistor is $I_{xf}=U_0/R_x$, where, $R_x$ represents the resistance of the discharge current limiting resistor, $P_{xf}$ represents the heating power of the discharge current limiting resistor, and $I_{xf}$ represents the current of the discharge current limiting resistor.

Technical effects and advantages of the present invention: The method for active anti-jamming of transmitted signals surrounded by a constant electric field makes use of the strong correction ability of a DC regulated power supply or a storage battery to keep the electric field constant, eliminate the impact of the changing electromagnetic field in the environment on the transmitted signals and ensure communication quality. Specifically, the method has the following advantages:

1. The anti-jamming capability is not affected by the length of the cable because the longer the cable, the more the electrostatic charges will be accumulated on the cable, and the more powerful the correction energy will be, and when external interference affects the distribution and stability of the whole or partial electric field, the response will be even faster, and the relative advantage will be more obvious;

2. The anti-jamming capability is not affected by the frequency of jamming signals. Whether the jamming signal is high frequency, low frequency or medium frequency, the energy storage system can quickly repair the affected electric field.

## BRIEF DESCRIPTION OF THE DRAWINGS

FIG. 1 is a structural schematic view of the prior art;

FIG. 2 is a schematic section view of a cable of the present invention;

FIG. 3 is a structural schematic view of a method for active anti-jamming of transmitted signals surrounded by a constant electric field in the present invention;

FIG. 4 is a structural schematic view of a specific method for implementing the present invention.

In the figures: 1, cable shielding layer conductor; 2, anti-jamming core conductor; 3, power supply; 4, signal core; 5, equivalent inductance of the shielding layer; 6, equivalent resistance of the shielding layer; 7, two-position switch; 8, charge current limiting resistor; 9, discharge current limiting resistor.

## DETAILED DESCRIPTION

The technical solutions in the embodiments of the present invention will be clearly and completely described below in conjunction with the drawings in the embodiments of the present invention. Obviously, the described embodiments are only some, not all of the embodiments of the present invention. All other embodiments obtained by those of ordinary skill in the art without creative work based on the embodiments of the present invention are within the scope of protection of the present invention.

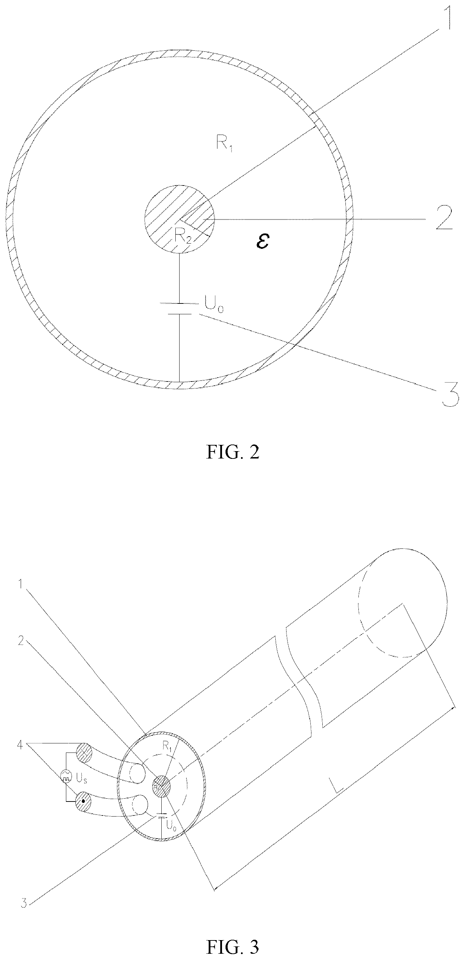

The present invention provides an active anti-jamming method in a constant electric field as shown in FIG. 2-FIG. 3, comprising the following steps:

S1, applying a DC voltage $U_0$ between the anti-jamming core conductor 2 of a cable and the cable shielding layer conductor 1 by a DC regulated power supply or a storage battery to obtain an electrical displacement at the cable axis;

S2, calculating the electric field intensity between the cable shielding layer conductor 1 and the anti-jamming core conductor 2 in the radial position according to the cable structure and the applied DC voltage $U_0$;

S3, calculating the charges that are accumulated and need to be repaired per unit length of the cable;

S4, calculating the capacitance between the cable shielding layer conductor 1 and the anti-jamming core conductor 2; and

S5, the electric field correction energy stored between the cable shielding layer conductor 1 and the anti-jamming core conductor 2 is distributed in the cable, and the electric field that has changed under the impact of the jamming signals is repaired, wherein DC voltage is provided by a power supply 3, a cable shielding layer 1 connects the cathode of the power supply 3 and an anti-jamming core connects the anode of the power supply 3. In this embodiment, the anti-jamming core is an inner core of the cable, the inner core is only used to generate a constant environmental electric field and does not transmit signals. In the area between the cable shielding layer 1 and the anti-jamming core, a constant electric field is established, signals are transmitted in the constant electric field and the environment remains stable and free from external influences; the type of the power supply 3 needed for establishing an electric field is storage battery pack or DC regulated power supply to ensure that a constant and persistent electric field is established in the cable; the voltage $U_0$ applied in order to establish an electric field is greater than the level $U_s$ of the signals transmitted in the cable; $U_s$ is the level of signals in the signal core 4, the shielding voltage $U_0$ applied in the cable must be smaller than nominal DC insulation level Up of the cable and $U_P$ is greater than 1.6 times of $U_0$; cable length L is >> the outside diameter D of the cable shielding layer conductor 1, and L/D>20;

In this embodiment, the cable is a cylindrical shielding cable, the inside radius of the cable shielding layer conductor 1 is $R_1$, the radius of the anti-jamming core conductor is $R_2$, and the equivalent average dielectric constant of the insulating medium filled in the middle is $\varepsilon$. Since the insulating medium in different parts of the cable is not the same and there are also other signal cores 4, $\mathcal{E}$ is used as the equivalent average dielectric constant. A voltage $U_0$ is applied between the cable shielding layer conductor 1 and the anti-jamming core conductor 2. Taking the axis of the cable as the electrical axis, and r as the radius, a cylinder is made. The electrical displacement at the location that is r from the axis is

preferably, in S1, calculated by the following method:

$$D_E = \frac{\tau}{2\pi r} r^o$$

where, $D_E$ is electrical displacement, i.e., the change in potential in the direction of the electric field, $r^o$ is a direction vector, and r is the radius of a cylinder of which electricaxis is based on cable axis;

In S2, the electric field intensity between the cable shielding layer conductor 1 and the anti-jamming core conductor is calculated with the following formula:

$$\vec{E} = \frac{\tau}{2\pi \varepsilon r} r^o .$$

Path integral of the electric field direction

$$\int_1^2 \vec{E} d\vec{l} = \int_{R2}^{R1} \frac{\tau}{2\pi \varepsilon r} dr = \frac{\tau}{2\pi \varepsilon} \ln(R1 / R2) = U_0$$

where, $\vec{E}$ is electric field intensity; In is an operational symbol for calculating logarithms based on the natural logarithm e, R1 is the inside radius of the cable shielding layer conductor, and R2 is the outside radius of the anti-jamming core conductor of the cable. The physical meaning of the formula: Taking the point on R2 as the starting point and the point on R1 as the end point, the sum of the changes in the potential along the path from the starting point to the end point in the direction of the electric field is the applied anti-jamming voltage $U_0$.

Electric field intensity can be obtained

$$E = \frac{\tau}{2\pi \varepsilon r} = \frac{U_0 \cdot 2\pi \varepsilon}{\ln(R1 / R2)} \cdot \frac{1}{2\pi \varepsilon r} = \frac{U_0}{r \ln(R1 / R2)}$$

where, E is directionless electric field intensity, and $\tau$ are the charges accumulated on the cable shielding layer conductor 1 and the anti-jamming core; Dr is electrical displacement; $\vec{l}$ is a path of electrical displacement in the direction of electric field intensity, R1 is the inside radius of the cable shielding layer conductor 1, and R2 is the outside radius of the anti-jamming core conductor 2;

Preferably, in S3, the charges accumulated per unit length of the cable between the cable shielding layer conductor 1 and the anti-jamming core conductor 2 is calculated with the following formula;

$$\tau = U_0 \cdot \frac{2\pi \varepsilon}{\ln(R1 / R2)} .$$

When the cable length is L, the charges accumulated at $R_1$ and $R_2$ inside the cable are calculated with the following formula

$$\tau_{R_1} = 2\pi R_1 \sigma_{R_1} \cdot L = \frac{2\pi \varepsilon U_0}{\ln(R1 / R2)} \cdot L$$

$$\tau_{R_2} = -2\pi R_2 \sigma_{R_2} \cdot L = -\frac{2\pi\varepsilon U_0}{\ln(R1/R2)} \cdot L$$

Preferably, in S4, the capacitance between the cable shielding layer 1 and the anti-jamming core conductor 2 per unit length is calculated with the following formula

$$C = \frac{2\pi\varepsilon}{\ln(R1/R2)}$$

When the cable length is L, the capacitance between the cable shielding layer conductor and the anti-jamming core conductor with a length of L is calculated with the following formula

$$C_L = \frac{2\pi\varepsilon}{\ln(R1/R2)} \cdot L.$$

Preferably, in S5, the electric field correction energy stored between the cable shielding layer conductor 1 and the anti-jamming core conductor 2 with a length of L is

$$W_E = \frac{1}{2} C U_0^2 = \frac{\pi\varepsilon U_0^2}{\ln(R1/R2)} \cdot L.$$

Preferably, the sum of the stored electric field correction energy and the power supply energy forms total anti-jamming energy,

$$W = W_E + W_P$$

where, W is total anti-jamming energy, $W_E$ is stored electric field correction energy, and $W_P$ is power supply energy.
If the power supply 3 is a storage battery pack, then $W_P=3600 U_0 \cdot AH$, where AH is the AH value of the storage battery pack;
If the power supply 3 is a DC regulated power supply, as the power grid is connected, $W_P$ can be deemed to be infinite.
The energy of the power supply 3 and the energy stored in the cable jointly maintain the distribution and stability of the electric field in the cable, and the power supply 3 often can provide larger and durable energy supply to timely correct the affected electric field and supplement electric field energy storage and not to be affected by ground resistance and ground inductance, and its anti-jamming capability is not affected by cable length;

The present invention also provides a control device for realizing the foregoing active anti-jamming method in a constant electric field, comprising,

a two-position switch 7 connecting the cable shielding layer conductor 1 and the anti-jamming core conductor 2;

a charge current limiting resistor 8 connecting a working position in the two-position switch 7 and used for limiting the charge current when an anti-jamming electric field is established; and a discharge current limiting resistor 9 connecting a maintenance position in the two-position switch 7 and used for consuming the energy stored in an electric field.

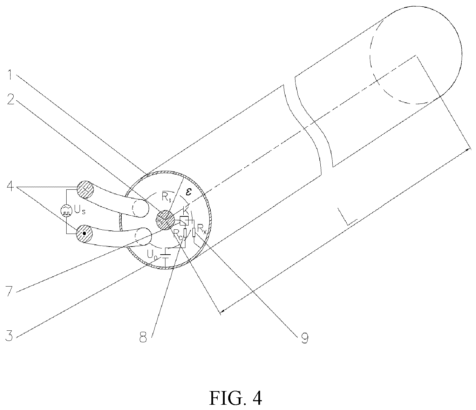

To facilitate maintenance, it is necessary to provide an energy release path and device for the electric field, as shown in FIG. 4.
The energy release path comprises a switch and a discharge current limiting resistor 9, and the discharge current limiting resistor 9 is used for consuming the energy stored in the electric field. When maintenance is needed, the two-position switch 7 is set in the maintenance position, the power supply 3 is disconnected, and the energy stored in the cable flows through the discharge current limiting resistor 9 and is consumed through heat emitting.
When the two-position switch 7 is set in the working position, the voltage between the cable shielding layer conductor 1and the anti-jamming core is $U_0$, the heating power of the resistor is the largest, and DC voltage $U_0$ charges

the cable shielding layer conductor 1 and the anti-jamming core conductor via the charge current limiting resistor 8. When the power supply 3 is just connected, the voltage between the cable shielding layer conductor 1 and the anti-jamming core is 0, the heating power of the charge current limiting resistor 8 is the largest, which is: $P_{xc}=U_0^2/R_C$, and the current flowing through the charge current limiting resistor 8 is $I_{xc}=U_0/R_C$; With the supplementation of energy, the voltage gradually increases, the current flowing through the charge current limiting resistor 8 gradually decreases, and the heating power also gradually decreases. The voltage level of the two-position switch 7 shall not be less than $U_0$, and the rated current shall not be less than the maximum current flowing through the charge current limiting resistor 8; $P_{xc}$ represents the heating power of the charge current limiting resistor 8, $R_C$ represents the resistance of the charge current limiting resistor 8, and $I_{xc}$ represents the current of the charge current limiting resistor 8.

When the two-position switch 7 is set in the maintenance position, the power supply 3 is disconnected. When the discharge current limiting resistor 9 is just connected, the voltage between the cable shielding layer conductor 1 and the anti-jamming core is $U_0$, the heating power of the discharge current limiting resistor 9 is the largest, which is: $P_{xf}=U_0^2/R_x$, and the current flowing through the discharge current limiting resistor 9 is $I_{xf}=U_0/R_x$, where, $R_x$ represents the resistance of the discharge current limiting resistor 9, $P_{xf}$ represents the heating power of the discharge current limiting resistor 9, and $I_{xf}$ represents the current of the discharge current limiting resistor 9.

The working position is used to establish an electric field during normal operation and continue to provide a power supply 3. The maintenance position is used to release the electric energy stored in the cable before maintenance to avoid safety accidents during construction. The rated current of the switch shall not be less than the larger value of charge current and discharge current. The two positions of the switch can maximally avoid operation errors and safety accidents in the process of use, and make the operation simple. When the working position is set, the cable is automatically charged to store energy and provide anti-jamming energy. When the maintenance position is set, the power supply 3 is automatically disconnected, and the discharge path is automatically connected to release energy to avoid safety accidents.

Lastly, it should be noted that the foregoing embodiments are intended to describe and not to limit the technical solutions of the present invention. Although the present invention has been elaborated by referring to the foregoing embodiments, those skilled in the art should understand that they still can modify the technical solutions of the foregoing embodiments, or equivalently replace some or all of the technical features therein, and all modifications, equivalent replacements and improvements made without departing from the spirit and principle of the present invention shall be within the protection scope of the present invention.

## Claims

1. An active anti-jamming method in a constant electric field, wherein the method comprises the following steps:

   S1, applying a DC voltage $U_0$ between the anti-jamming core conductor of a cable and the cable shielding layer conductor by a DC regulated power supply or a storage battery to obtain an electrical displacement $D_E$ at the cable axis.
   S2, calculating the electric field intensity $\vec{E}$ between the cable shielding layer conductor and the anti-jamming core conductor in the radial direction according to the cable structure and the DC voltage $U_0$;
   S3, calculating the charges $\tau$ that are accumulated and need to be repaired per unit length of the cable between the cable shielding layer conductor and the anti-jamming core conductor;
   S4, calculating the capacitance between the cable shielding layer conductor and the anti-jamming core conductor; and
   S5, calculating the electric field correction energy $W_E$ stored between the cable shielding layer conductor and the anti-jamming core conductor, and regarding the sum of power supply energy $W_P$ and the electric field correction energy $W_E$ as total anti-jamming energy $W$; and repairing according to the total anti-jamming energy $W$ the electric field that has changed under the impact of the jamming signals.

2. The active anti-jamming method in a constant electric field according to claim 1, wherein in S1, the electrical displacement $D_E$ is calculated by the following method:

$$D_E = \frac{\tau}{2\pi r}\, r^{\,o}$$

where, $r^{\,o}$ is a direction vector, r being the cylindrical radius of the cable, and $\tau$ being the charges accumulated on the cable shielding layer conductor and the anti-jamming core.

3. The active anti-jamming method in a constant electric field according to claim 1, wherein in S2, the electric field intensity $\vec{E}$ between the cable shielding layer conductor and the anti-jamming core conductor is calculated with the following formula:

$$\vec{E} = \frac{\tau}{2\pi\varepsilon r}\, r^{o}\, ;$$

taking the point on R2 as the starting point and the point on R1 as the end point, the sum of the changes in the potential along the path from the starting point to the end point in the direction of the electric field being the applied anti-jamming voltage $U_0$,

$$\int_{1}^{2} \vec{E}d\,\vec{l} = \int_{R2}^{R1} \frac{\tau}{2\pi\varepsilon r} dr = \frac{\tau}{2\pi\varepsilon}\ln(R1/R2) = U_0$$

where, ln is natural logarithm, i.e., an operational symbol for calculating logarithms based on the constant e, $\vec{l}$ being a path of electrical displacement in the direction of electric field intensity, R1 being the inside radius of the cable shielding layer conductor, and R2 being the outside radius of the anti-jamming core conductor of the cable; directionless electric field intensity E being obtained

$$E = \frac{\tau}{2\pi\varepsilon r} = \frac{U_0 \cdot 2\pi\varepsilon}{\ln(R1/R2)} \cdot \frac{1}{2\pi\varepsilon r} = \frac{U_0}{r\,\ln(R1/R2)}\,.$$

4. The active anti-jamming method in a constant electric field according to claim 3, wherein in S3, the charges $\tau$ that are accumulated and need to be repaired per unit length of the cable between the cable shielding layer conductor and the anti-jamming core conductor:

$$\tau = U_0 \cdot \frac{2\pi\varepsilon}{\ln(R1/R2)}$$

when the cable length is L, the charges accumulated on the cable shielding layer and anti-jamming core conductor with a length of L being:

$$\tau_{R1} = 2\pi R1 \sigma_{R1} \cdot L = \frac{2\pi\varepsilon U_0}{\ln(R1/R2)} \cdot L$$

$$\tau_{R2} = -2\pi R2 \sigma_{R2} \cdot L = -\frac{2\pi\varepsilon U_0}{\ln(R1/R2)} \cdot L$$

where, $\tau_{R1}$ are charges accumulated on the inside radius of the cable shielding layer conductor with a length of $L$, $\tau_{R2}$ being charges accumulated on the outside radius of the anti-jamming core of the cable with a length of $L$, and $\sigma$ being charge density.

5. The active anti-jamming method in a constant electric field according to claim 3, wherein in S4, the capacitance between the cable shielding layer conductor and the anti-jamming core conductor is calculated with the following formula

$$C = \frac{2\pi\varepsilon}{\ln(R1/R2)}\,;$$

where, C is the capacitance between the cable shielding layer conductor and the anti-jamming core conductor per unit length,

when the cable length is L, the capacitance between the cable shielding layer conductor and the anti-jamming

$$C_L = \frac{2\pi\varepsilon}{\ln(R1 / R2)} \cdot L$$

core conductor with a length of $L$ being ,

where, $C_L$ is the capacitance between the cable shielding layer conductor and the anti-jamming core conductor.

6. The active anti-jamming method in a constant electric field according to claim 3, wherein in S5, the electric field correction energy stored between the cable shielding layer conductor and the anti-jamming core conductor is

$$W_E = \frac{1}{2} C U_0^2 = \frac{\pi\varepsilon U_0^2}{\ln(R1 / R2)} \cdot L.$$

7. A control device for realizing the active anti-jamming method in a constant electric field according to any of claims 1 to 6, wherein the device comprises,

a two-position switch connecting the cable shielding layer conductor and the anti-jamming core conductor;
a charge current limiting resistor connecting a working position in the two-position switch and used for limiting the charge current when an anti-jamming electric field is established; and
a discharge current limiting resistor connecting a maintenance position in the two-position switch and used for limiting discharge current when energy stored in an electric field is consumed.

8. The control device for realizing the active anti-jamming method in a constant electric field according to claim 7, wherein

when the two-position switch is set in the working position, DC voltage $U_0$ charges the cable shielding layer conductor and the anti-jamming core conductor via the charge current limiting resistor; when the power supply is just connected, the voltage between the cable shielding layer conductor and the anti-jamming core conductor being 0, the heating power of the charge current limiting resistor being the largest, which is: $P_{xc}=U_0^2/R_C$, and the current flowing through the charge current limiting resistor being $I_{xc}=U_0/R_C$; where, $P_{xc}$ represents the heating power of the charge current limiting resistor, Rc representing the resistance of the charge current limiting resistor, and $I_{xc}$ representing the current of the charge current limiting resistor;
when the two-position switch is set in the maintenance position, the power supply being disconnected; when the discharge current limiting resistor is just connected, the voltage between the cable shielding layer conductor and the anti-jamming core conductor being $U_0$, the heating power of the discharge current limiting resistor being the largest, which is: $P_{xf}=U_0^2/R_x$, and the current flowing through the discharge current limiting resistor being $I_{xf}=U_0/R_x$, where, $R_x$ represents the resistance of the discharge current limiting resistor, $P_{Xf}$ representing the heating power of the discharge current limiting resistor, and $I_{xf}$ representing the current of the discharge current limiting resistor.

FIG. 1

FIG. 2

FIG. 3

FIG. 4

## INTERNATIONAL SEARCH REPORT

International application No.

**PCT/CN2022/104784**

### A. CLASSIFICATION OF SUBJECT MATTER

H04B 3/32(2006.01)i;  H01B 11/18(2006.01)i

According to International Patent Classification (IPC) or to both national classification and IPC

### B. FIELDS SEARCHED

Minimum documentation searched (classification system followed by classification symbols)

H04B; H01B

Documentation searched other than minimum documentation to the extent that such documents are included in the fields searched

Electronic data base consulted during the international search (name of data base and, where practicable, search terms used)

CNTXT, CNABS, VEN, WOTXT, EPTXT, USTXT, CNKI, IEEE: 线缆, 同轴电缆, 电压, 电源, 恒定, 电场, 干扰, 屏蔽, 导体, coaxial cable, voltage, power source, stable, electric field, perturbation, disturb, noise barrier, shield, conductor

### C. DOCUMENTS CONSIDERED TO BE RELEVANT

| Category* | Citation of document, with indication, where appropriate, of the relevant passages | Relevant to claim No. |
|---|---|---|
| PX | CN 113328767 A (NANJING TURBINE & POWER CONTROL CO., LTD.) 31 August 2021 (2021-08-31) entire document | 1-8 |
| A | CN 1741200 A (HARADA TECHNOLOGIES CO., LTD.) 01 March 2006 (2006-03-01) description, page 4 paragraph 1-page 8 paragraph 4, and figures 1-7 | 1-8 |
| A | CN 108054686 A (STATE GRID TIANJIN ELECTRIC POWER CO. et al.) 18 May 2018 (2018-05-18) entire document | 1-8 |
| A | CN 102573431 A (SHAANXI YATAI ELECTRICAL TECHNOLOGY CO., LTD.) 11 July 2012 (2012-07-11) entire document | 1-8 |
| A | JP H04150422 A (OCEAN CABLE CO., LTD.) 22 May 1992 (1992-05-22) entire document | 1-8 |

☐ Further documents are listed in the continuation of Box C.   ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **06 September 2022** | **16 September 2022** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104784**

| Patent document cited in search report | | | Publication date (day/month/year) | Patent family member(s) | | | Publication date (day/month/year) |
|---|---|---|---|---|---|---|---|
| CN | 113328767 | A | 31 August 2021 | CN | 113328767 | B | 02 November 2021 |
| CN | 1741200 | A | 01 March 2006 | None | | | |
| CN | 108054686 | A | 18 May 2018 | None | | | |
| CN | 102573431 | A | 11 July 2012 | None | | | |
| JP | H04150422 | A | 22 May 1992 | JP | 2968573 | B2 | 25 October 1999 |

Form PCT/ISA/210 (patent family annex) (January 2015)